Europäisches Patentamt

European Patent Office

Office européen des brevets

(11) Publication number: 0 355 912 A2

## EUROPEAN PATENT APPLICATION

(21) Application number: 89202081.9

(22) Date of filing: 14.08.89

(51) Int. Cl.4: B32B 5/12

(30) Priority: 15.08.88 NL 8802022

(43) Date of publication of application:
28.02.90 Bulletin 90/09

(84) Designated Contracting States:
AT BE CH DE ES FR GB IT LI LU NL SE

(71) Applicant: ADPROTECH B.V.
Beukenhorst Eastbuilding Jupiterstraat 206
NL-2132 HJ Hoofddorp(NL)

(72) Inventor: Hilders, Hendricus Gerardus
Beukenhorst Eastbuilding Jupiterstraat 206
NL-2132 HJ Hoofddorp(NL)

(74) Representative: de Boer, Hindrik Geert Jan et
al
De Boer & Wigman De Lairessestraat 133
NL-1075 HJ Amsterdam(NL)

(54) Flat sandwich-shaped body.

(57) Flat sandwich-shaped body having two skin layers and at least one core layer, whereby the skin layers are each provided with at least two, substantially parallel layers of substantially parallel fibres, whereby the fibres of the one layer cross those of the other layer at an angle between $25° - 155°$, and whereby the fibres of the one layer are jointed with the fibres of the other layer, by means of a jointing material, at the location of the crossing points, whilst each layer of substantially parallel fibres is provided with an impregnating medium.

Fig. 1

EP 0 355 912 A2

# FLAT SANDWICH-SHAPED BODY

The invention relates to a flat sandwich-shaped body having two skin layers and at least one core layer.

Such a sandwich-shaped body is inter alia known from the European patent application No. 85.103731.7, in the name of Hoechst AG. This known sandwich-shaped body, which in practice is usually used as a floor or sidewall panel in an aeroplane, has as a core layer an elastic, mesh-shaped layer of (polyester) fibres, which has been given a studded structure by means of a depth drawing operation. Said layer of (polyester) fibres is impregnated with e.g. phenol resin. The skin layers of the known sandwich-shaped body are made of e.g. aluminium or steel.

Generally the following requirements are made of a sandwich-shaped body of the above kind, to be used in an aeroplane:
- the skin layers must be resistant to bending and torsion forces, to wear and tear, to high concentrated loads and they must have a high impact strength.
- the core layer must especially be resistant to shearing forces.

Of course the weight per square meter of a sandwich-shaped body, which is e.g. used as a floor or sidewall panel in an aeroplane, must furthermore be as low as possible, and the sandwich-shaped body must also meet the international aviation requirements with regard to fire safety and smoke gas toxicity.

A drawback of the known sandwich-shaped body is that it does not satisfy all the above requirements - especially with regard to the strength and rigidity of the skin layers and with regard to the fire safety and smoke gas toxicity of the core layer.

The object of the invention is to provide a durable sandwich-shaped body that meets all the above-mentioned requirements, such as e.g. the strength and rigidity of the skin layers, their adherence to the core layer, as well as the aforesaid fire safety and smoke gas toxicity of the core layer.

In order to accomplish that objective the sandwich-shaped body of the kind mentioned in the preamble is according to the invention characterized in that the skin layers are each provided with at least two, substantially parallel layers of substantially parallel fibres, whereby the fibres of the one layer cross those of the other layer at an angle between 25° - 155°, and whereby the fibres of the one layer are jointed with the fibres of the other layer, by means of a jointing material, at the location of the crossing points, whilst each layer of substantially parallel fibres is provided with an impregnating medium. Thus a sandwich-shaped body is obtained with skin layers which are resistant to all kinds of bending and torsion forces, which are to a high degree resistant to wear, tear and concentrated loads. Said high resistance to concentrated loads is e.g. important when people wearing high heels walk on a sandwich-shaped body according to the invention which is used as a floor panel of an aeroplane. Said jointing material may e.g. be polyester or glass stitching.

It is generally known to form the skin layers of a sandwich-shaped body from fibres which, arranged according to a so-called "warp and weft" pattern, have a "corrugated" extension. A disadvantage of the skin layers thus formed is especially that they are less strong/rigid than the skin layers of a sandwich-shaped body according to the invention. Besides, a drawback of the skin layers thus formed is that, when they are being impregnated with e.g. phenol resin, an unnessary accumulation of phenol resin takes place between the "corrugations" of the fibres, so that a sandwich-shaped body with skin layers thus formed is unnecessarily heavy, i.e. has a weight of at least 3.4 kgs per square meter. A sandwich-shaped body according to the invention on the contrary has a maximum weight of substantially 2.8 kgs per square meter. In general a sandwich-shaped body according to the invention has a weight reduction of approximately 10% - 30% compared to known sandwich-shaped bodies.

A further advantage of a sandwich-shaped body according to the invention is that the angle between 25° - 155°, at which the fibres of the one layer cross those of the other layer, can be selected such that the fibres thus directed determine the strength/rigidity of the sandwich-shaped body required exactly in that particular direction.

It is noted that the application of a sandwich-shaped body according to the invention is of course not limited to e.g. a sidewall panel of an aeroplane. A sandwich-shaped body according to the invention can also be used in especially all kinds of vehicles, vessels, buildings etc.

One embodiment of a sandwich-shaped body according to the invention is characterized in that the skin layers are each provided with at least four, substantially parallel layers of substantially parallel fibres, whereby the fibres of a first layer cross those of a second, a third and a fourth layer at an angle of substanlly 45°, 90° and 135° respectively, and whereby the fibres of one layer are jointed with those of a neighbouring layer, substantially at the location of crossing points, by means of a jointing material, whilst each layer of substantially parallel fibres is provided with an impregnating medium. An embodiment of this kind has appeared to be a very satisfactory one in practice.

A further embodiment of a flat sandwich-shaped body according to the invention is characterized in that the skin layers are each provided with at least two imaginary sets of substantially parallel layers of substantially parallel fibres, whereby fibres of adjacent layers of a set cross each other at substantially right angles, and whereby the fibres of one layer are jointed with those of a neighbouring layer, substantially at the location of crossing points, by means of a jointing material, whilst each layer of substantially parallel fibres is provided with an impregnating medium. For example, each skin layer is provided with two imaginary sets -one outer and one inner set- of two substantially parallel layers of substantially parallel fibres, whereby the fibres of a first layer cross those of a second, third and a fourth layer at an angle of substantially 90°, 135° and 45°, which first and second layer form the one imaginary outer set, and which third and fourth layer form the imaginary inner set, or vice versa. An embodiment of this kind appeared to be the most satisfactory one in practice, because of its symmetrical construction with respect to strength and rigidity. The fibres of the first and second layer preferably comprise glass fibres, whereas the fibres of the third and fourth layer preferably comprise carbon fibres. Or more in general, in regard to impact strength: the layer(s) at the core side are relatively stiff and the layer(s) at the outside are relatively tough.

A further embodiment of a sandwich-shaped body according to the invention is characterized in that the impregnating medium contains a thermosetting and/or a thermoplastic material. In this connection it is noted - perhaps unnecessarily - that a thermosetting material is a plastic which, after an originally plastic stage, becomes solid for example as a result of being heated under pressure, and cannot be made deformable by heat afterwards, whereas a thermoplastic material is a plastic which can be plasticized by heating.

A further embodiment of a sandwich-shaped body according to the invention is characterized in that a layer of substantially parallel fibres contains carbon fibres, glass fibres, aramide fibres, thermoplastic fibres and/or ceramic fibres.

A further embodiment of a sandwhich-shaped body according to the invention is characterized in that it comprises inserts of a synthetic material, which material in its liquid form has been moulded in prefabricatied holes of the core layer, whereby the skin layers have holes, the location of which correspond with that of the holes of the ccre layer, which holes of the skin layer have been made after hardening of the synthetic material. In these inserts of a synthetic material, whether or not being reinforced with glass fibres for example, screws can be screwed in for attachement of the sandwich-shaped body to other parts of an aeroplane, for example. This removes the rust-disadvantage of well know metal inserts in known sandwich-shaped bodies due to the potential difference between metal of the inserts and carbon in the skin layers.

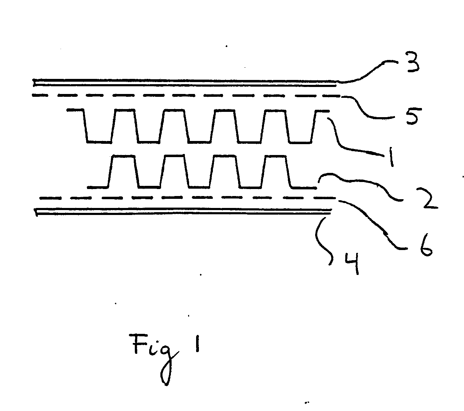

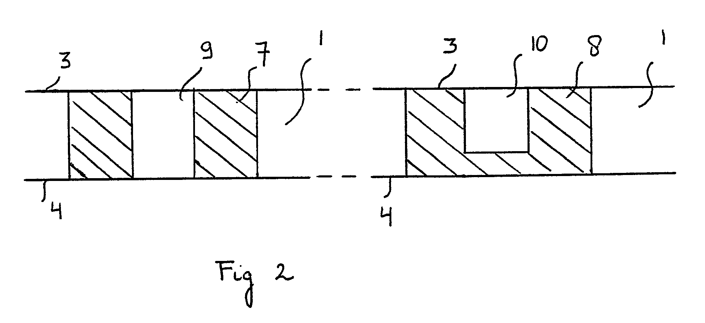

The invention will be further explained with reference to a drawing of figures 1 and 2, illustrating very diagrammatically a cross-section of a sandwich-shaped body according to the invention.

In figure 1 two core layers (1, 2), e.g. made of a plastic or of a metal, can be distinguished, each layer having a studded structure. The skinlayers (3, 4) may be adhered to the respective core layers (1, 2) by means of pressing and/or via adhesive layers (5, 6). The adhesive layers (5, 6) are provided with an impregnating means, which contains e.g. epoxy resin, phenol resin and/or a thermoplastic material.

The core layers (1, 2) may also have a honeycomb structure, instead of a studded structure. In that case the only core layer (1 - 2) may mainly be made of e.g. polyamide paper, which is impregnated with phenol resin, or e.g. of a metal, such as aluminium.

The core layers (1, 2) may also have a foam structure, instead of a studded structure or a honeycomb structure. In that case the core layers (1, 2) may mainly be made of e.g. polyvinylchloride, phenol, polyurethane, polyimide or polyethersulfon (or a compound thereof).

The adhesive layers (5, 6) are e.g. formed of a fabric of glass fibre or a film of a plastic material, impregnated with a well sticking resin (e.g. epoxy, polyimide).

The individual studs of the core layers (1, 2), as well as their mutual distances, may be dimensioned such that the two core layers may be pressed to fit together, whereby in the pressed-together position the studs of the one core layer will be located between the studs of the other core layer. Special is hereby that in the pressed-together position the two core layers have a octogonal or hexagonal (=honeycomb) structure, seen in cross-section.

Figure 2 shows very schematically a cross-section of a sandwich-shaped body according to the invention, comprising a core layer (1), skin layers (3, 4), as well as two different inserts (7, 8). The inserts (7, 8) define a continuous and a non-continuous hole (9, 10), respectively, for receiving a screw, for example.

A sandwich-shaped body according to the invention, which can otherwise be produced very inexpensively in comparison with known sandwich-shaped bodies, is in practice made in such dimensions that it is interchangeable with known sandwich-shaped bodies, e.g. provided in aeroplanes.

## Claims

1. Flat sandwich-shaped body having two skin layers and at least one core layer, characterized in that the skin layers are each provided with at least two, substantially parallel layers of substantially parallel fibres, whereby the fibres of the one layer cross those of the other layer at an angle between $25° - 155°$, and whereby the fibres of the one layer are jointed with the fibres of the other layer, by means of a jointing material, at the location of the crossing points, whilst each layer of substantially parallel fibres is provided with an impregnating medium.

2. Flat sandwich-shaped body according to claim 1, characterized in that the skin layers are each provided with at least four, substantially parallel layers of substantially parallel fibres, whereby the fibres of a first layer cross those of a second, a third and a fourth layer at an angle of substantially $45°$, $90°$ and $135°$ respectively, and whereby the fibres of one layer are jointed with those of a neighbouring layer, substantially at the location of crossing points, by means of a jointing material, whilst each layer of substantially parallel fibres is provided with an impregnating medium.

3. Flat sandwich-shaped body according to claim 1 or 2, characterized in that the skin layers are each provided with at least two imaginary sets of substantially parallel layers of substantially parallel fibres, whereby fibres of adjacent layers of a set cross each other at substantially right angles, and whereby the fibres of one layer are jointed with those of a neighbouring layer, substantially at the location of crossing points, by means of a jointing material, whilst each layer of substantially parallel fibres is provided with an impregnating medium.

4. Flat sandwich-shaped body according to claim 1, 2 or 3, characterized in that the impregnating medium contains a thermosetting and/or thermoplastic material.

5. Flat sandwich-shaped body according to claim 1, 2, 3 or 4, characterized in that a layer of substantially parallel fibres contains carbon fibres, glass fibres, aramide fibres, thermoplastic fibres and or ceramic fibres.

6. Flat sandwich-shaped body according to any one of the preceding claims 1 - 5, characterized in that the at least one core layer has a honeycomb structure.

7. Flat sandwich-shaped body according to claim 6, characterized in that the at least one core layer is substantially made of polyamide paper, which is impregnated with phenol resin, or of a metal, such as aluminium.

8. Flat sandwich-shaped body according to any one of the preceding claims 1 - 7, characterized in that the at least one core layer has a foam structure.

9. Flat sandwich-shaped body according to claim 8, characterized in that the at least one core layer is substantially made of one of the materials polyvinylchloride, phenol, polyurethane, polyimide or polyethersulfon, or a compound thereof.

10. Flat sandwich-shaped body according to any one of the preceding claims 1 - 5 or 8, characterized in that the at least one core layer has a studded structure.

11. Flat sandwich-shaped body according claim 10 having at least two core layers, characterized in that the individual studs, as well as their mutual distances, are dimensioned such that the at least two core layers can be pressed to fit together, whereby in the pressed-together position the studs of the one core layer are located between the studs of the other core layer.

12. Flat sandwich-shaped body according to claim 11, characterized in that in the pressed-together position the two core layers have a octogonal or hexagonal structure, seen in cross-section.

13. Flat sandwich-shaped body according to any one of the preceding claims 1 - 12, characterized in that the skin layers are adhered to the at least one core layer by means of pressing.

14. Flat sandwich-shaped body according to any one of the preceding claims 1 - 12, characterized in that the skin layers are adhered to the at least one core layer via an adhesive layer, said adhesive layer being provided with an impregnating medium.

15. Flat sandwich-shaped body according to claim 14, characterized in that the impregnating medium contains a thermoplastic material, and/or a thermosetting material such as epoxy resin, phenol resin.

16. Flat sandwich-shaped body according to any one of the preceding claims 1 - 15, characterized in that it comprises inserts of a synthetic material, which material in its liquid form has been moulded in prefabricated holes of the core layer, whereby the skin layers have holes, the location of which correspond with that of the holes of the core layer, which holes of the skin layer have been made after hardening of the synthetic material.

Fig 1

Fig 2